# EUROPEAN PATENT APPLICATION

(11) **EP 2 403 092 A2**
(43) Date of publication of application: **04.01.2012**
(21) Application number: 11005355.0
(22) Date of filing: 30.06.2011
(51) Int. Cl.: H02H 9/04

(54) **Overvoltage circuit, and motor starter, overload relay and low-power system including the same**

(30) Priority: 30.06.2010 US 827109
(71) Applicant: Eaton Corporation, Cleveland, OH 44114-2594 (US)
(72) Inventor: Riley, Joseph D., Grafton, WI 53024 (US)
(74) Representative: Klang, Alexander H.

(57) **Abstract**

A motor starter (4) includes a contactor (6) and an overload relay (8). The overload relay includes a power supply (10) having a voltage (12;64), a processor (14) powered by the power supply voltage and being structured to control the contactor, and an overvoltage circuit (16;50). The overvoltage circuit includes a voltage reference (52) having a voltage (54), a comparator (56), a load (60) and a switch (58). The comparator includes a first input (62) for the power supply voltage, the first input cooperating with the voltage of the voltage reference to determine a threshold voltage, a second input (65) for voltage reference voltage, and an output (60). The switch is controlled by the comparator output and is structured to electrically connect the power supply voltage to ground (68) through the load whenever the power supply voltage exceeds the threshold voltage.

## Description

### Field

The disclosed concept pertains generally to overvoltage circuits and, more particularly, to voltage clamping circuits for direct current power supplies, such as, for example, power supplies for processors. The disclosed concept also pertains to motor starters, overload relays or low-power systems employing such circuits.

### Background Information

It is known to employ a Zener diode as a relatively low cost voltage clamp circuit. However, a Zener diode exhibits non-ideal characteristics, such as conducting some amount of current prior to reaching the rated Zener voltage. This current draw under nominal operating conditions may be unacceptably high for very low power systems.

U.S. Patent No. 5,436,552 discloses a clamping circuit for clamping a reference voltage at a predetermined level. The clamping circuit includes a constant current circuit having a constant current source and a current mirror circuit. A trimmable resistance receives a constant current from the constant current circuit, and a clamping MOS transistor receives a voltage generated by the trimmable resistance at its gate to regulate a current flowing through a clamping node. It is possible to make a rapid current-voltage characteristic and to set an arbitrary clamping potential of the clamping circuit. The clamping voltage threshold provided by this circuit is determined by the gate voltage (VG) applied to the clamping MOS transistor. The accuracy of the clamping voltage is initially provided by precision trimming of a resistor (R), which receives a constant current (Io), such that the voltage (VG=Io*R) developed across the resistor during operation allows the clamping MOS transistor to turn on at a clamping voltage (VC) whenever |VG-VC| > |Vthp|. A problem, however, is that the clamping MOS transistor's threshold voltage, Vthp, varies over temperature. Hence, a suitably consistent clamping voltage is not maintained under varying operating conditions.

For example, it is believed that typical MOSFETs do a relatively poor job of maintaining a consistent gate-source threshold voltage across varying operating -conditions (i.e., varying load currents; varying temperatures). For example, this could either conduct excessive current at a nominal input voltage (if the threshold is too low), or fail to conduct (if the threshold is too high).

It is known to provide a low current voltage clamp using very low voltage, precision enhancement-mode MOSFETs in place of a Zener diode. This employs a precision gate-source voltage provided by programmable MOSFETs, since conventional MOSFETs do not have sufficient gate-source voltage precision. However, such programmable MOSFETs are believed to have a relatively high cost.

There is room for improvement in overvoltage circuits.

There is also room for improvement in motor starters, overload relays or low-power systems employing such circuits.

### SUMMARY

These needs and others are met by embodiments of the disclosed concept, which provides an overvoltage circuit that conducts negligible current below a threshold voltage, but conducts sufficient current (thereby limiting voltage) above the threshold voltage.

In accordance with one aspect of the disclosed concept, a motor starter comprises: a contactor; and an overload relay comprising: a power supply having a voltage, a processor powered by the voltage of the power supply and being structured to control the contactor, and an overvoltage circuit comprising: a voltage reference having a voltage, a comparator comprising: a first input for the voltage of the power supply, the first input cooperating with the voltage of the voltage reference to determine a threshold voltage, a second input for the voltage of the voltage reference, and an output, a load, and a switch controlled by the output, the switch being structured to electrically connect the voltage of the power supply to ground through the load whenever the voltage of the power supply exceeds the threshold voltage.

The power supply of the overload relay may be structured to be parasitically-powered from a number of power lines to a motor.

The overload relay may further comprise a number of current transformers structured to sense current flowing to a motor and to supply power to the power supply.

As another aspect of the disclosed concept, an overload relay comprises: a power supply having a voltage; a processor powered by the voltage of the power supply; and an overvoltage circuit comprising: a voltage reference having a voltage, a comparator comprising: a first input for the voltage of the power supply, the first input cooperating with the voltage of the voltage reference to determine a threshold voltage, a second input for the voltage of the voltage reference, and an output, a load, and a switch controlled by the output, the switch being structured to electrically connect the voltage of the power supply to ground through the load whenever the voltage of the power supply exceeds the threshold voltage.

As another aspect of the disclosed concept, a low-power system comprises: a power supply having a voltage; a processor powered by the voltage of the power supply; a voltage reference having a voltage; a comparator comprising: a first input for the voltage of the power supply, the first input cooperating with the voltage of the voltage reference to determine a threshold voltage, a second input for the voltage of the voltage reference, and an output; a load; and a switch controlled by the output, the switch being structured to electrically connect the voltage of the power supply to ground through the load whenever the voltage of the power supply exceeds the threshold voltage, wherein the processor is structured to dynamically adjust the voltage of the power supply, and wherein the processor is further structured to dynamically adjust the voltage of the voltage reference.

As another aspect of the disclosed concept, an overvoltage circuit is for a power supply having a voltage. The overvoltage circuit comprises: a voltage reference having a voltage; a comparator comprising: a first input for the voltage of the power supply, the first input cooperating with the voltage of the voltage reference to determine a threshold voltage, a second input for the voltage of the voltage reference, and an output; a load; and a switch controlled by the output, the switch being structured to electrically connect the voltage of the power supply to ground through the load whenever the voltage of the power supply exceeds the threshold voltage.

The voltage reference, the comparator and the switch may be part of a voltage supervisor integrated circuit.

The voltage of the power supply may be less than the threshold voltage, and current consumed by the voltage supervisor integrated circuit may be less than about 1 uA.

The load may be an impedance of the switch.

The voltage of the voltage reference may be one of a predetermined, fixed direct current voltage and a variable voltage.

The voltage reference, the comparator and the switch may be part of a processor.

The comparator may be structured to provide hysteresis for the first and the second inputs to avoid rapid switching of the output when the voltage of the power supply is almost equal to the threshold voltage.

### BRIEF DESCRIPTION OF THE DRAWINGS

A full understanding of the disclosed concept can be gained from the following description of the preferred embodiments when read in conjunction with the accompanying drawings in which:
Figure 1 is a block diagram in schematic form of a motor starter system in accordance with embodiments of the disclosed concept.
Figure 2 is a block diagram in schematic form of an overload relay in accordance with another embodiment of the disclosed concept.
Figure 3 is a block diagram in schematic form of an overvoltage circuit in accordance with another embodiment of the disclosed concept.
Figure 4 is a block diagram in schematic form of a low-power system including an overvoltage protection circuit in accordance with another embodiment of the disclosed concept.
Figures 5 and 6 are block diagrams in schematic form of overvoltage circuits in accordance with other embodiments of the disclosed concept.

### DESCRIPTION OF THE PREFERRED EMBODIMENTS

As employed herein, the term "number" shall mean one or an integer greater than one (i. e., a plurality).

As employed herein, the term "processor" means a programmable analog and/or digital device that can store, retrieve, and process data; a computer; a workstation; a personal computer; a microprocessor; a microcontroller; a microcomputer; a central processing unit; a mainframe computer; a mini-computer; a server; a networked processor; or any suitable processing device or apparatus.

As employed herein, the term "low-power processor" means a processor structured to operate with relatively low power, such as, for example, less than about 10 mW.

The disclosed concept is described in association with motor starters and overload relays, although the disclosed concept is applicable to a wide range of low-power systems and direct current power circuits.

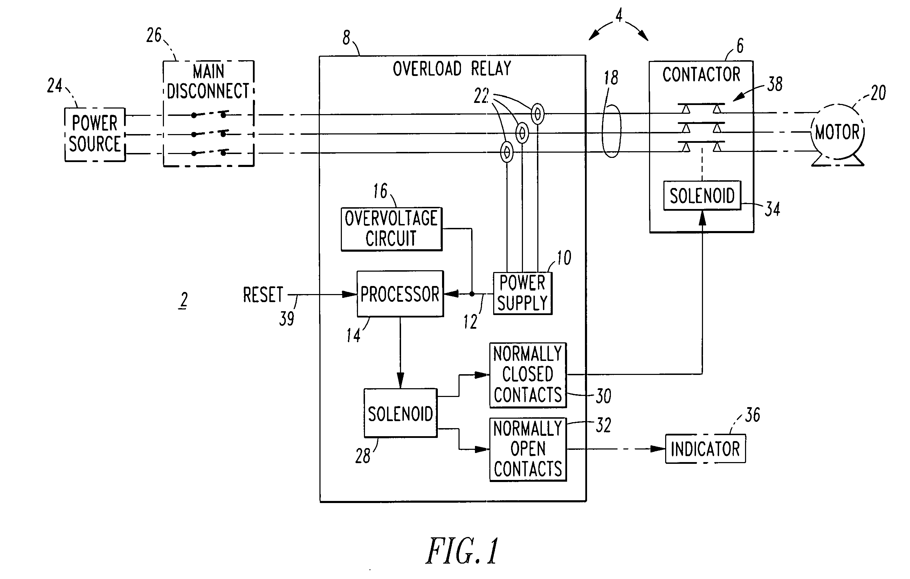

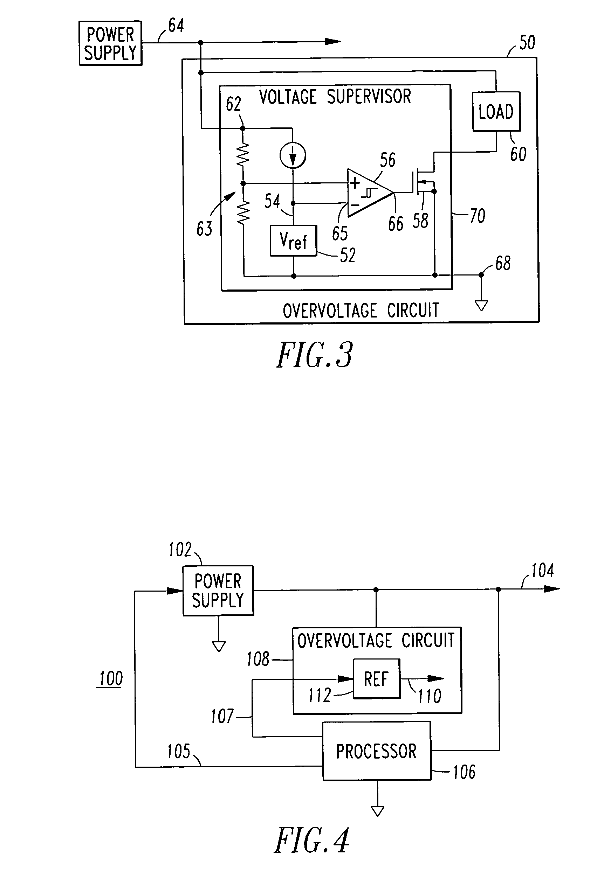

Referring to Figure 1, a motor starter system 2 includes a motor starter 4 formed by a contactor 6 and an overload relay 8. The overload relay 8 includes a power supply 10 having a voltage 12, a processor 14 powered by the power supply voltage 12 and being structured to control the contactor 6, and an overvoltage circuit 16, which will be discussed, below, in connection with, for example, overvoltage circuit 50 of Figure 3.

### Example 1

The power supply 10 of the overload relay 8 is preferably structured to be parasitically-powered from a number of power lines 18 to a motor 20 (shown in phantom line drawing). In that instance, the overload relay 8 further includes a number of current transformers 22 structured to sense current flowing to the motor 20 and to supply power to the power supply 10.

The example motor starter system 2 further includes a power source 24 (shown in phantom line drawing) and a main disconnect 26 (shown in phantom line drawing), which supplies power to the overload relay 8.

The example processor 14 controls a solenoid 28 that, in turn, controls normally closed contacts 30 and normally open contacts 32. The example normally closed contacts 30 control a solenoid 34 of the contactor 6. The example normally open contacts 32 control an indicator 36 that indicates the status of separable contacts 38 of the contactor 6. The example processor 14 can also input a reset signal 39.

### Example 2

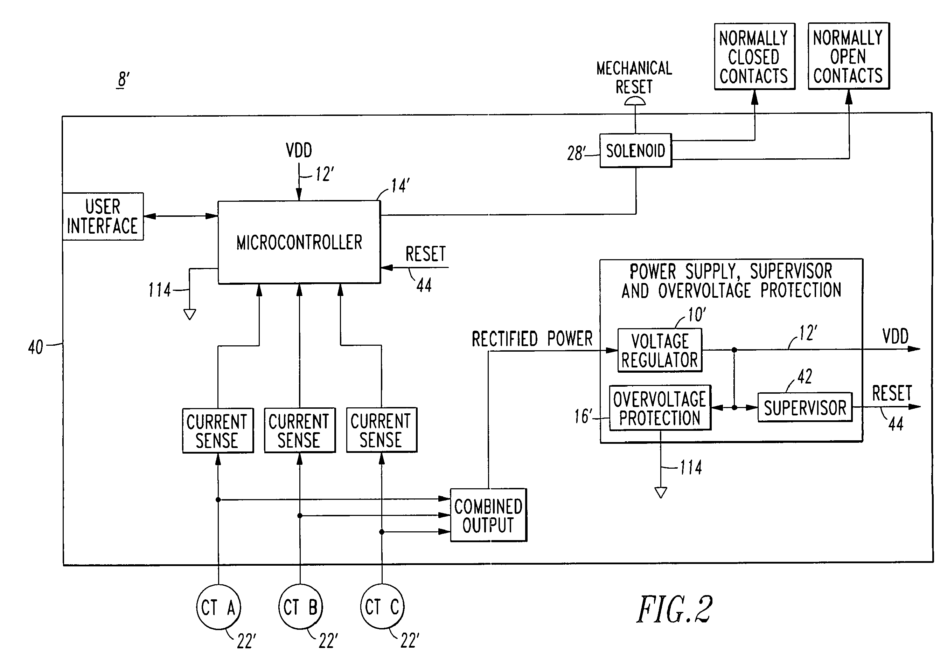

Figure 2 shows an overload relay 8' that can be the same as or similar to the overload relay 8 of Figure 1. The overload relay 8' similarly includes a power supply 10' having a voltage 12' (e.g., without limitation, +2.5V) , a microcontroller 14' (e.g., without limitation, that can operate from about 1.8V to about 3.3V), an overvoltage protection circuit 16' and a solenoid 28'.

The disclosed solid state overload relay 8' is a parasitically-powered motor protection device. Current transformers 22' are employed to transform electromagnetic fields generated by alternating current (AC) flowing to a motor (not shown, but see the motor 20 of Figure 1) into power for the solid state overload relay 8'. As such, the corresponding control circuit 40 can operate with relatively very little power (e.g., without limitation, about 1.5 mW). By significantly reducing the amount of power needed to operate the control circuit 40, the size of the current transformers 22' can be decreased, thereby reducing product cost and size.

Although the example overload control circuit 40 can operate with relatively very little power, increased motor currents can provide periods of more than ample power. When insufficient power is available, a voltage supervisor circuit 42 provides a reset signal 44 to the microcontroller 14'.

### Example 3

Figure 3 shows an overvoltage circuit 50, which can be the same as or similar to the overvoltage circuits 16,16' of Figures 1 and 2. The overvoltage circuit 50 includes a voltage reference 52 having a voltage 54, a comparator 56, a switch 58 and a load 60. The comparator 56 includes a first input 62 for a power supply voltage 64 to be protected, a second input 65 (-) for the voltage reference voltage 54, and an output 66. In this example, the input 62 includes a divider 63 cooperating with the voltage 54 of the voltage reference 52 to determine a threshold voltage. Also, in this example, the voltage 54 is less than the threshold voltage. The switch 58 is controlled by the comparator output 66 and is structured to electrically connect the power supply voltage 64 to ground 68 through the load 60 whenever the power supply voltage 64 exceeds the threshold voltage.

### Example 4

The voltage reference 52, the comparator 56 and the switch 58 can be part of a voltage supervisor integrated circuit 70.

### Example 5

When the power supply voltage 64 is less than the threshold voltage, current consumed by the over voltage circuit 50 is less than about 1 uA.

### Example 6

Referring again to Figure 2, during periods of ample power, excess energy is provided to the power supply rail 12' of the microcontroller 14', for example, by way of the microcontroller's I/O protection diodes (not shown). For example, a pair of diodes (not shown) limits the voltage at an I/O pin (not shown) to a level less than a positive supply voltage (e.g., Vdd) and greater than the lowest nominal voltage for that circuit (e.g., ground 114; a negative supply voltage, Vss (not shown)). This prevents damage to the transistors (not shown) of the I/O circuit (not shown). Normally, both of these diodes are reverse-biased and do not conduct. However, if the voltage at an I/O pin rises above Vdd or below Vss, then the corresponding protection diode will be forward-biased and conduct, thereby limiting the voltage at that I/O pin, but potentially providing excess energy to the power supply rail 12'.

Since the control circuit 40 operates with relatively very little available power, this surplus energy could cause the voltage level on the power supply rail 12' to increase to a level that could damage the microcontroller 14' or other circuitry. The disclosed overvoltage protection circuit 16' consumes negligible current when the power supply voltage 12' is nominal, and draws a sufficient amount of current to keep the power supply voltage 12' in check during periods of excess energy. This behavior is advantageously contrasted with that of a Zener diode, which is not suited for a relatively low power application since it conducts relatively significant current below its Zener voltage. For example, a nominal voltage on the power supply rail 12' would cause a Zener diode (not shown) to conduct an unacceptably high amount of current. As such, the disclosed concept employs a low power (and low cost) solution.

### Example 7

Although an overload relay 8' is disclosed in Figure 2, the disclosed concept is applicable to any low-power circuit in which excess energy can accumulate faster than is dissipated by normal operation of that circuit. This could include, for example and without limitation, circuits that are powered via energy harvesting (e.g., without limitation, harnessing solar, kinetic or electromagnetic energy) which may experience periods of excessive input power, or input circuits (e.g., without limitation, for wireless sensor networks) which may experience periods in which excessive sensor input voltage is generated.

### Example 8

The disclosed overload relay 8' of Figure 2 employs the overvoltage protection circuit 16' such as the example overvoltage circuit 50 of Figure 3 including the example voltage supervisor integrated circuit 70 and the example load 60 to provide a low-power voltage clamp. The voltage supervisor integrated circuit 70 monitors the voltage level of the power supply voltage 64, such as the power supply rail 12' of Figure 2. When the power supply rail 12' is below a suitable threshold voltage level (e.g., without limitation, above the nominal power supply voltage, but lower than the maximum voltage rating of the microcontroller 14' of Figure 2), then no current flows through the external load 60 (Figure 3) and the only current consumed by this circuit is from the supply current of the voltage supervisor integrated circuit 70 (e.g., without limitation, typically less than about 1 uA). This is a significant improvement over a Zener diode alone which may draw 50 times more current at nominal voltage. When the power supply rail 12' rises and exceeds the threshold voltage level, then the switch 58 is turned on, which allows current to flow through the load 60, thereby clamping the power supply rail 12' to a safe voltage level.

### Example 9

Although the overvoltage circuit 50 of Figure 3 can employ a commercially available voltage supervisor integrated circuit 70, a wide range of other suitable circuits can be employed. For example and without limitation, the voltage reference 52, two-input comparator 56 and output FET switch 58 features of the voltage supervisor integrated circuit 70 could be constructed using discrete components. Alternatively, the load 60 could be included with a voltage supervisor to form an overvoltage protection integrated circuit (not shown). Also, constant or variable voltage references can be employed.

### Example 10

The load 60 can be a Zener diode.

### Example 11

Also, alternative loads can be employed, such as for example and without limitation, resistors, transistors and/or diodes (including Zener diodes and LEDs), or any combination thereof. Furthermore, the function of the voltage supervisor integrated circuit 70 can be performed by any suitable programmable device such as, for example and without limitation, a processor such as a low-power microcontroller.

### Example 12

An example voltage supervisor integrated circuit 70 is a Voltage Detector Series NCP300 or NCP301 marketed by On Semiconductor of Phoenix, Arizona.

### Example 13

The power supply voltage 64 to be protected in Figure 3 can be a nominal voltage (e.g., without limitation, a nominal voltage of about 2.5 VDC in a range of about 1.8 VDC to about 3.3 VDC). The threshold voltage (e.g., without limitation, about 3.0 VDC), which is determined by the divider 63 and the voltage reference voltage 54, is greater than the nominal voltage but less than a maximum voltage (e.g., without limitation, 3.3 VDC), which is greater than the nominal voltage.

### Example 14

The voltage reference voltage 54 can be one of a predetermined, fixed direct current voltage and a variable voltage, as will be discussed below in connection with Figure 4.

### Example 15

The load 60 can be selected from the group consisting of a resistor, a transistor, a diode, a Zener diode and a light emitting diode.

### Example 16

The comparator 56 can be structured to provide hysteresis for the first and the second inputs 62,65, in order to avoid rapid on/off switching of the comparator output 66 when the power supply voltage 64 is almost equal to the threshold voltage as determined by the voltage reference voltage 54 and the divider 63. This could avoid rapid switching that would otherwise be generated due to relatively small signal "noise" on the power supply voltage 64 or the example power supply rail 12' of Figure 2.

It will be appreciated that the divider 63 is not required. See, for example and without limitation, Example 19, below.

### Example 17

Referring to Figure 4, a low-power system 100 includes a power supply 102 having a voltage 104, a processor 106 powered by the power supply voltage 104, and an overvoltage circuit 108, which can be similar to the overvoltage circuits 16,16' of Figures 1 and 2. Here, however, the processor 106 is structured to dynamically adjust the power supply voltage 104 using line 105, and is further structured to dynamically adjust the threshold voltage 110 of the overvoltage circuit 108 using line 107.

For example, line 107 can control a variable voltage reference 112 in an intelligent way. The low-power system 100, for instance, can dynamically adjust its power supply voltage 104 (e.g., dynamic voltage scaling) by an output from the processor line 105 to the power supply 102. Decreasing the power supply voltage 104 results in decreased power consumption, but also a corresponding decrease in maximum clock rate. Hence, such a system 100 could lower its power supply voltage 104 during periods of little activity to conserve power, but then temporarily raise its power supply voltage 104 when it needs to quickly complete some task. Such a system 100 could, in turn, employ the overvoltage circuit 108 with the adjustable threshold voltage 110 and variable voltage reference 112 to suitably "follow" the dynamic voltage scaling.

### Example 18

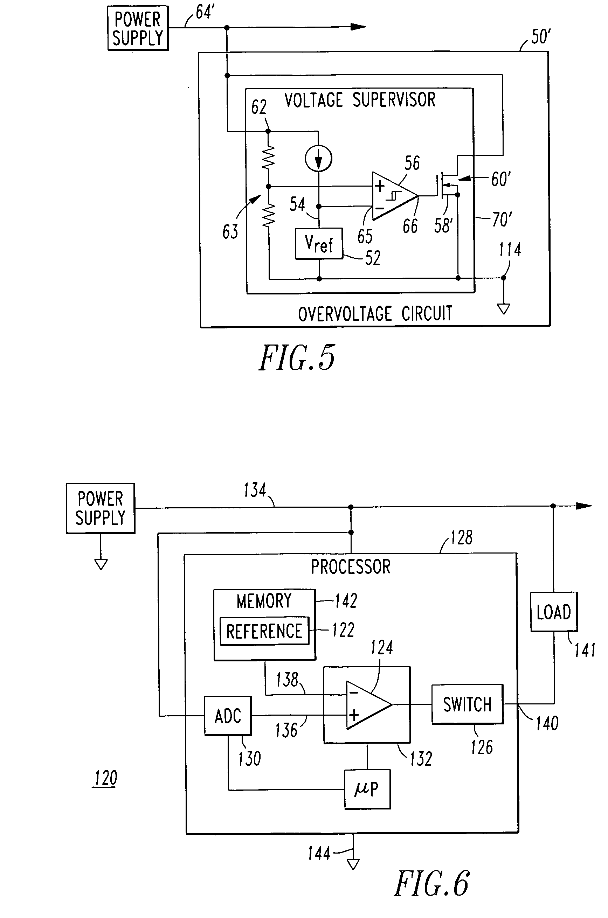

Figure 5 shows another overvoltage circuit 50', which is similar to the overvoltage circuit 50 of Figure 3. Here, the impedance 60' of switch 58' (e.g., FET) of voltage supervisor integrated circuit 70' is the load. When the switch 58' is on or closed, this briefly electrically connects power supply voltage 64' to ground 114, as limited by the ON impedance (resistance) of the switch 58', until the power supply voltage 64' dips below the predetermined voltage threshold determined by reference voltage 54 and divider 63. It is believed that this could function by relatively rapidly switching the switch 58' on and off.

### Example 19

Figure 6 shows another overvoltage circuit 120 in which a voltage reference 122, a comparator 124 and a switch 126 are part of a processor 128. The example processor 128 includes an analog-to-digital converter (ADC) 130, the comparator 124 and a routine 132 structured to periodically measure power supply voltage 134 from the analog-to-digital converter 130, compare measured power supply voltage 136 to a predetermined value 138, and change output 140 to enable a load 141 if the measured power supply voltage 136 exceeds the predetermined value 138. For example, a memory 142 stores the predetermined value 138, and the routine 132 periodically executes an arithmetic operation (comparator 124) to compare the measured power supply voltage 136 to the predetermined value 138. The switch 126 drives the processor output 140 responsive to the comparator 124 of the routine 132 to enable the load 141 and cause it to conduct current from the power supply voltage 134 to ground 144. In this example, there is no divider 63 (Figures 3 and 5) and the threshold voltage is the same as the voltage reference 122 and predetermined value 138, all of which represent voltages using corresponding digital voltage values.

### Example 20

As an alternative to Example 19, the processor 128 can employ an external analog-to-digital converter (not shown) and/or an internal comparator circuit (not shown). For example, such a comparator circuit can be employed to determine if the power supply voltage 134 (e.g., input to one of the two inputs of the comparator) exceeds a predetermined voltage reference (e.g., input to the other one of the two inputs of the comparator). If so, then the processor employs output 140 to enable the load 141. If these functions are already available in a particular processor, then this can provide a relatively lower cost solution since a separate voltage supervisor is not needed.

While specific embodiments of the disclosed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed concept which is to be given the full breadth of the claims appended and any and all equivalents thereof.

### REFERENCE NUMERICAL LIST

- 2: motor starter system
- 4: motor starter
- 6: contactor
- 8: overload relay
- 8': overload relay
- 10: power supply
- 10': power supply
- 12: voltage
- 12': voltage
- 14: processor
- 14': microcontroller
- 16: overvoltage circuit
- 16': overvoltage protection circuit
- 18: number of power lines
- 20: motor
- 22: number of current transformers
- 22': current transformers
- 24: power source
- 26: main disconnect
- 28: solenoid
- 28': solenoid
- 30: normally closed contacts
- 32: normally open contacts
- 34: solenoid
- 36: indicator
- 38: separable contacts
- 39: reset signal
- 40: control circuit
- 42: voltage supervisor circuit
- 44: reset signal
- 50: overvoltage circuit
- 52: voltage reference
- 54: voltage
- 56: comparator
- 58: switch
- 60: load
- 62: first input
- 63: divider
- 64: power supply voltage
- 65: second input
- 66: output
- 68: ground
- 70: voltage supervisor integrated circuit
- 70': voltage supervisor integrated circuit
- 100: low-power system
- 102: power supply

- 104: voltage
- 105: line
- 106: processor
- 107: line
- 108: overvoltage circuit
- 110: threshold voltage
- 112: variable voltage reference
- 114: ground
- 120: overvoltage circuit
- 122: voltage reference
- 124: comparator
- 126: switch
- 128: processor
- 130: analog-to-digital converter
- 132: routine
- 134: power supply voltage
- 136: measured power supply voltage
- 138: predetermined value
- 140: output
- 141: load
- 142: memory
- 144: ground

## Claims

1. An overvoltage circuit (16;16';50;50';108;120) for a power supply having a voltage (64;64';100;104), said overvoltage circuit comprising:
a voltage reference (52) having a voltage (54);
a comparator (56) comprising:
a first input (62) for the voltage of said power supply, said first input cooperating with the voltage of the voltage reference to determine a threshold voltage,
a second input (65) for the voltage of said voltage reference, and
an output (66);
a load (60); and
a switch (58) controlled by the output, said switch being structured to electrically connect the voltage of said power supply to ground (68) through said load whenever the voltage of said power supply exceeds said threshold voltage.

2. The overvoltage circuit (50;50') of Claim 1 wherein said voltage reference, said comparator and said switch are part of a voltage supervisor integrated circuit (42).

3. The overvoltage circuit (50;50') of Claim 2 wherein when the voltage of said power supply is less than the threshold voltage, current consumed by said voltage supervisor integrated circuit is less than about 1 uA.

4. The overvoltage circuit (50') of Claim 1 wherein said load is an impedance of said switch.

5. The overvoltage circuit (50;50') of Claim 1 wherein the voltage of said power supply is a nominal voltage; and wherein said threshold voltage is greater than the nominal voltage but less than a maximum voltage, which is greater than the nominal voltage.

6. The overvoltage circuit (50;50';108) of Claim 1 wherein the voltage of said voltage reference is one of a predetermined, fixed direct current voltage (64;64') and a variable voltage (104).

7. The overvoltage circuit (50;50') of Claim 1 wherein said load (60;60') is selected from the group consisting of a resistor, a transistor, a diode, a Zener diode and a light emitting diode.

8. The overvoltage circuit (120) of Claim 7 wherein said processor comprises an analog-to-digital converter (130), said comparator and a routine (132) structured to periodically measure the voltage (134) of said power supply from the analog-to-digital converter, compare (124) the measured voltage (136) of said power supply to a predetermined value (138), and change said output (140) to enable the load (141) if the voltage of said power supply exceeds the predetermined value.

9. The overvoltage circuit (120) of Claim 8 wherein said processor further comprises a memory (142) storing the predetermined value (138); and wherein the routine comprises an arithmetic operation (124) to compare the measured voltage of said power supply to the predetermined value.

10. The overvoltage circuit (120) of Claim 1 wherein said voltage reference (138), said comparator (124) and said switch (126) are part of a processor (128); and wherein said processor comprises an output (140), said comparator, and a routine (132) structured to change the output of said processor responsive to the output of said comparator to enable the load if the voltage of said power supply exceeds said threshold voltage.

11. The overvoltage circuit (50;50') of Claim 1 wherein said comparator is structured to provide hysteresis for the first and the second inputs to avoid rapid switching of said output when the voltage of said power supply is almost equal to said threshold voltage.

12. A motor starter (4) comprising:
a contactor (6); and
an overload relay (8) comprising:
a power supply (10) having a voltage (12;64),
a processor (14) powered by the voltage of said power supply and being structured to control said contactor, and
the overvoltage circuit (16;50) of Claim 1.

13. The motor starter (4) of Claim 12 wherein the power supply of said overload relay is structured to be parasitically-powered from a number of power lines (18) to a motor (20).

14. An overload relay (8;8') comprising:
a power supply (10;10') having a voltage (12;12';64);
a processor (14;14') powered by the voltage of said power supply; and
the overvoltage circuit (16;16';50) of Claim 1.

15. A low-power system (100) comprising:
a power supply (102) having a voltage (104);
a processor (106) powered by the voltage of said power supply;
and
the overvoltage circuit of Claim 1,
wherein said processor is structured (105) to dynamically adjust the voltage of said power supply, and
wherein said processor is further structured (107) to dynamically adjust the voltage of said voltage reference.
